# EUROPEAN PATENT SPECIFICATION

(11) **EP 0 870 962 B1**
(45) Date of publication and mention of the grant of the patent: **20.06.2001**
(21) Application number: 98302617.0
(22) Date of filing: 02.04.1998
(51) Int. Cl.: F16L 3/233, F16L 3/137, H02G 3/30, B65D 63/10

(54) **Tie**
Band
Bande

(30) Priority: 11.04.1997 GB 9707343
(43) Date of publication of application: 14.10.1998
(73) Proprietor: SPIRENT PLC, Crawley, West Sussex RH10 2QL (GB)
(72) Inventor: Blanks, Steven John, Winsford, Cheshire, CW7 2TU (GB)
(74) Representative: Evans, Huw David Duncan

(56) References cited:
- US-A- 4 462 141
- US-A- 5 224 244
- US-A- 5 601 261

## Description

This invention relates to a method of forming a one-piece tie of plastics material, the tie comprising an elongate flexible flat strap provided with a series of ratchet serrations thereon, a head at a first end of the strap, an aperture extending through the head, perpendicular to the plane of the strap in the as-moulded condition of the tie, and a pawl disposed in the head aperture and arranged to engage the strap serrations when the strap is formed into a loop and its second end inserted through the head aperture.

US 4 462 141 and US 5 601 261 disclose ties of the above-mentioned type. Another known type of tie comprises an elongate strap having a series of ratchet serrations on one surface and a head at one end thereof. The head projects from the opposite surface of the strap and defines an aperture which extends perpendicular to the strap. A pawl is disposed in the head aperture for engaging the strap serrations when the strap is formed into a loop and inserted into the head aperture.

These so-called cable ties are widely used in industry for tying cables in bundles, in order to form harnesses. A disadvantage of these conventional cable ties is that their heads are not flat. Thus, when a tie is fastened around a bundle of cables, its head does not lie sufficiently flat against the cables, and protrudes considerably even when the excess length of the strap projecting beyond the head is cut off. This protuberance can rub and chafe against cables in adjacent bundles, and in some instances this can cause the cables to break or short-circuit.

It has been proposed to overcome this problem by providing a tie in which the head aperture extends generally parallel to the plane of the strap. Accordingly, when the tie is tied, the length of strap engaged by the head lies flat against the portion of the strap which underlies the head.

It will be appreciated that these so-called parallel entry ties are much flatter than conventional ties, because the thickness of the tie at the head is equal to the height of the head aperture plus the thickness of the floor and roof of the aperture. The thickness of the floor of the aperture is the same as the thickness of the strap, and the height of the aperture must be greater than the thickness of the strap which it receives. However, despite the head being much flatter, it is still at least twice as thick as the strap, and thus there remains a danger that the head can rub and chafe against cables, say in applications where bundles of cables are packed tightly together.

US 5 224 244 discloses a two-piece fastener for bundling cables etc., the fastener comprising a buckle having a pair of side-by-side apertures for respectively receiving opposite ends of a separate elongate strap.

We have now devised a method of moulding a tie of the type disclosed in US 4 462 141 and US 5 601 261 and which is characterised in that the tie is injection moulded from plastics material using two mould dies defining a mould cavity and separable in a straight line perpendicular to the plane of the strap and axially of the head aperture, the aperture being disposed outwardly of one lateral side edge of the flat strap, such that, when tied, the length of strap inside said head aperture lies generally parallel to and co-planar with said first end of the strap.

Again, the height of the head is equal to the height of the aperture plus the thickness of the floor and roof thereof. However, the present invention enables a much flatter head than conventional parallel entry ties, because the thickness of the floor can be reduced well below the thickness of the strap. The opposite ends of the strap effectively tie side-by-side against the surface of the article(s) about which it is fastened.

The head aperture extends perpendicular to the plane of the strap in its as-moulded condition and thus the tie is straightforward to injection mould from a plastics material such as nylon or polypropylene, using two dies defining a mould cavity and having projecting mould parts which co-operate to form the aperture, since the two dies can be separated in a straight line, perpendicular to the plane of the strap.

In one embodiment, the strap serrations are moulded on at least one surface of the flat strap, a pawl being moulded on the floor and/or roof of the aperture for engaging the strap serrations.

It will be appreciated that the floor and/or roof of the aperture have to be sufficiently thick to support the pawl. Thus, preferably in a second embodiment, the strap serrations are moulded on at least one side edge of the strap, a pawl being moulded on the or each side wall of the aperture. The side wall(s) can be made sufficiently thick to support the pawl(s), and it will be appreciated that the thickness of the side walls does not affect the height of the head.

Preferably, the head of the moulded tie is pivotable to a position in which the aperture extends generally parallel to the plane of the strap.

Embodiments of this invention will now be described by way of examples only and with reference to the accompanying drawings, in which:
FIGURE 1 is a plan view of an embodiment of tie moulded in accordance with this invention;
FIGURE 2 is a sectional view along the line A-A of Figure 1;
FIGURE 3 is a sectional view along the line C-C of Figure 1;
FIGURE 4 is a side view of the tie of Figure 1;
FIGURE 5 is an end view of the tie of Figure 1;
FIGURE 6 is a bottom view of the tie of Figure 1;
FIGURE 7 is a sectional view along the line B-B of Figure 6;
FIGURE 8 is a plan view of an alternative embodiment of tie moulded in accordance with this invention;
FIGURE 9 is a sectional view along the line A-A of Figure 8;
FIGURE 10 is a sectional view along the line C-C of Figure 8;
FIGURE 11 is a side view of the tie of Figure 8;
FIGURE 12 is an end view of the tie of Figure 8;
FIGURE 13 is a bottom view of the tie of Figure 8; and
FIGURE 14 is a sectional view along the line B-B of Figure 13.

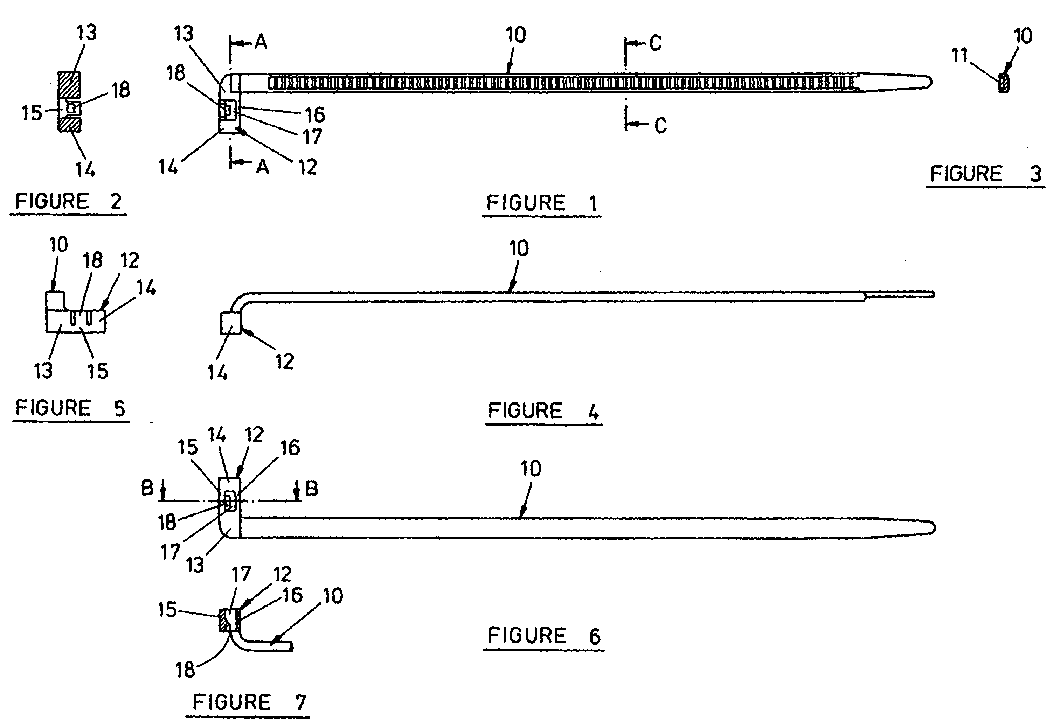

Referring to Figures 1 to 7 of the drawings, there is shown a one-piece tie of plastics material comprising a flat, elongate, flexible strap 10 provided with a series of transverse ratchet serrations 11 on its upper surface and a generally rectangular head 12 at one end thereof, the head projecting perpendicularly outwardly from one side edge of the strap 10.

In the as-moulded condition of the tie, the strap 10 curves downwardly through 90° adjacent the point at which it meets the head 12. The head 12 comprises a pair of parallel side walls 13,14 and front and rear walls 15,16, which define an aperture 17 that extends through the head 12, perpendicular to the plane of the flat portion of the strap 10. The strap 10 is connected to the upper surface of the side wall 13, and thus the aperture 17 is disposed to one side of the strap 10. A pawl 18 is pivotally mounted to the front wall 15 of the head, the pawl 18 projecting into the head aperture 17.

The width of the head aperture 17 between the opposite side walls 13,14 is slightly greater than the width of the strap 10: the height of the aperture 17, between the front and rear walls 15,16, is slightly greater than the overall thickness of the strap 10. The rearwardly facing surface of the rear wall 16 of the head 12 lies in the same plane as the lower surface of the strap 10 at the point where the strap 10 meets the head 12.

In use of the tie, the strap 10 is looped around a bundle of cables, with the serrated surface of the strap facing radially outwards. The free end of the strap 10 is passed through the head aperture 17 and then tension is applied to the projecting portion of the strap, to pull the strap 10 through the head aperture 17 and tight around the bundle of cables. As the strap 10 is pulled through the head 12, to form a loop around the bundle of cables, the curved end of the strap straightens and thus follows the same path as the straight portion of the tie. In this position, the former rearwardly facing surface of the rear wall 16 of the head 12 is pressed against the bundle of cables.

It will be appreciated that as the strap 10 is pulled through the head 12, the successive strap serrations 11 ride over the pawl 18 in the head aperture 17 in the conventional manner. The pawl 18 is inclined so as to allow the strap to be pulled through the head aperture in the tightening direction, but so as to prevent the strap from subsequently loosening. The pawl 18 thus serves to permanently lock the strap 10 in a loop around the cables.

Once the tie has been fully tightened, the projecting end of the strap can be cut off. The rear wall 16 of the head 12 is thin and thus the opposite ends of the strap effectively lie side-by-side against the surface of the bundle of cables. The strap 10 follows a convoluted path around the bundle of cables, and the head 12 extends axially of the loop defined by the strap, between opposite ends of the strap thereof.

The tie has a low profile because the ends of the strap do not overlap each other as in conventional parallel-entry ties; instead the ends of the strap lie side-by-side against the surface of the bundle of cables. The head of the tie does slightly raise the overall profile of the head, but this is minimised by making the front and rear walls 15,16 of the head as thin as possible. It can be seen that the front wall 15 of the head 12 is thicker than the rear wall to ensure that the wall has sufficient strength to withstand the forces that are applied to the pawl under conditions of excessive back-tension in the strap.

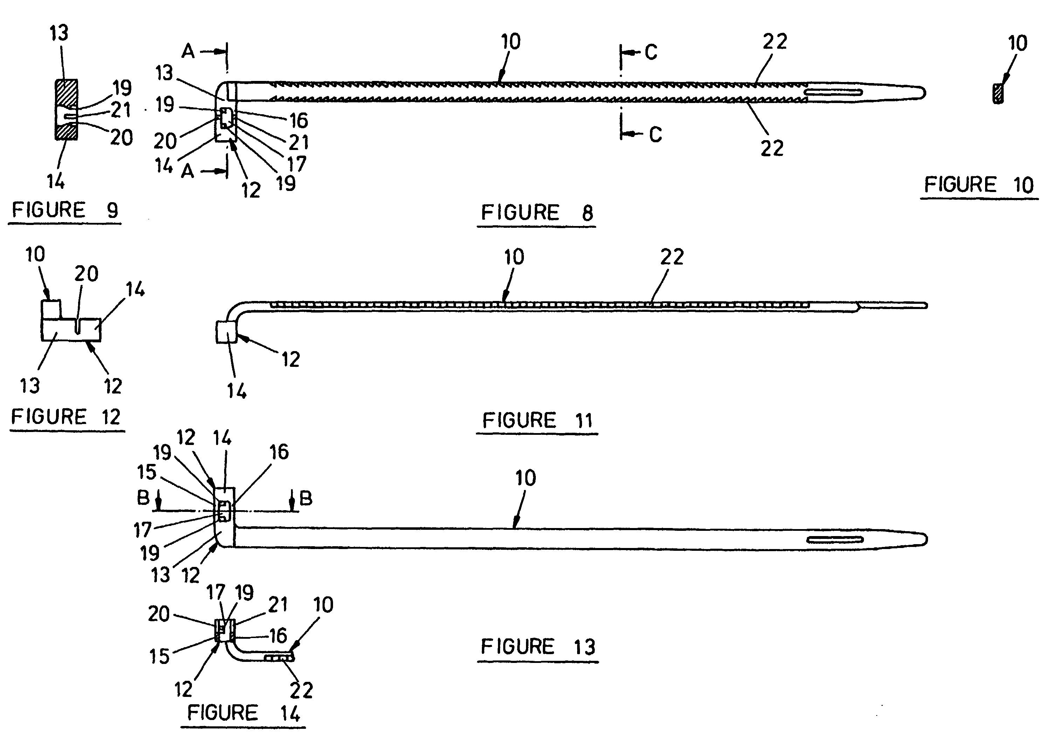

Referring to Figures 8 to 14 of the drawings, there is shown an alternative embodiment of tie in accordance with this invention, and like parts are given like reference numerals. In this embodiment, a pawl 19 is provided on each side wall 13,14 of the head, instead of being provided on the front wall 15. The strap 10 comprises a series of serrations 22 along its opposite side edges, which ride over the pawls 19,19 on opposite side walls 13,14 of the head, when the strap 10 is inserted into and pulled through the head aperture.

The profile of the head of the embodiment of Figures 8 to 14 can be made less than that of the embodiment of Figures 1 to 7, because the thickness of the front wall 15 can be reduced to correspond with that of the rear wall 16, owing to it not having to support a pawl. Preferably the front and rear walls comprise co-extending slots 20,21, which extend parallel to the aperture, and which enable the pawls 19 on opposite side walls 13,14 to repeatedly move apart, thereby increasing the width of the head aperture, as the strap is pulled through the head aperture.

The ties are manufactured by injection moulding from plastics material, using two dies defining a mould cavity and being separable in a straight line perpendicular to the line of the strap 10. In the as-moulded condition of the tie, the head 12 is disposed substantially perpendicular to its position in use, in order to allow the head aperture to be formed by cooperating mould parts. However in use, the curved end of the strap straightens, so that the head aperture lies generally parallel to the plane of the strap.

## Claims

1. A method of forming a one-piece tie of plastics material, the tie comprising an elongate flexible flat strap (10) provided with a series of ratchet serrations (11) thereon, a head (12) at a first end of the strap (10), an aperture (17) extending through the head (12), perpendicular to the plane of the strap (10) in the as-moulded condition of the tie, and a pawl (18) disposed in the head aperture (17) and arranged to engage the strap serrations (11/22) when the strap (10) is formed into a loop and its second end inserted through the head aperture (17), the method being characterised in that the tie is injection moulded from plastics material using two mould dies defining a mould cavity and separable in a straight line perpendicular to the plane of the strap (10) and axially of the head aperture (17), the aperture (17) being disposed outwardly of one lateral side edge of the flat strap (10), such that, when tied, the length of strap (10) inside said head (12) aperture (17) lies generally parallel to and co-planar with said first end of the strap (10).

2. A method as claimed in claim 1, characterised in that the tie is moulded with strap serrations (11) on at least one surface of the flat strap (10) and in that a pawl (18) is moulded on the floor and/or roof (15,16) of the aperture (17) for engaging the strap serrations (11).

3. A method as claimed in claim 1, characterised in that the tie is moulded with strap serrations (22) on at least one side edge of the flat strap (10) and in that a pawl (18) is moulded on the or each side wall (13,14) of the aperture (17).

4. A method as claimed in any preceding claim, characterised in that the head (12) of the tie is pivotable to a position in which the aperture (17) therethrough extends generally parallel to the plane of the strap (10).

## Patentansprüche

1. Verfahren zum Herstellen eines einstückigen Binders aus Kunststoffmaterial, der ein längliches, flexibles, flaches Band (10), das mit einer Reihe von Sperrzähnen (11) darauf versehen ist, einen Kopf (12) an einem ersten Ende des Bandes, eine Öffnung (17), die sich senkrecht zu der Ebene des Bandes (10) in dem Zustand des Binders wie gegossen durch den Kopf erstreckt, und eine Klinke (18) aufweist, die in der Kopföffnung (17) angeordnet und so ausgeführt ist, um die Bandzähne (11, 22) zu ergreifen, wenn das Band (10) zu einer Schlaufe gebildet und mit seinem zweitem Ende durch die Kopföffnung (17) gesteckt ist, wobei das Verfahren dadurch gekennzeichnet ist, daß der Binder aus Kunststoffmaterial unter Verwendung von zwei Gußformen spritzgeformt wird, die einen Gußhohlraum begrenzen und in einer geraden Linie senkrecht zu der Ebene des Bandes (10) und axial zu der Kopföffnung (17) teilbar sind, wobei die Öffnung (17) außerhalb von einer lateralen Seitenkante des flachen Bands (10) derart angeordnet ist, daß im gebundenen Zustand der Längenabschnitt des Bands (10) innerhalb der Öffnung (17) des Kopfs (12) im wesentlichen parallel zu und koplanar mit dem ersten Ende des Bands (10) liegt.

2. Verfahren nach Anspruch 1, dadurch gekennzeichnet, daß der Binder mit Bandzähnen (11) auf mindestens einer Oberfläche des flachen Bands (10) geformt wird und daß eine Klinke (18) an der Bodenwand und/oder der Deckenwand (15, 16) der Öffnung (17) zum Ergreifen der Bandzähne (11) geformt wird.

3. Verfahren nach Anspruch 1, dadurch gekennzeichnet, daß der Binder mit Bandzähnen (22) an mindestens einer Seitenkante des flachen Bands (10) geformt wird und daß eine Sperrklinke (18) auf der oder jeder Seitenwand (13, 14) der Öffnung (17) geformt wird.

4. Verfahren nach einem der vorhergehenden Ansprüche, dadurch gekennzeichnet, daß der Kopf (12) des Binders in eine Position schwenkbar ist, in der die Öffnung (17) durch ihn sich im wesentlichen parallel zu der Ebene des Band (10) erstreckt.

## Revendications

1. Un procédé de fabrication d'une attache en une seule pièce en matière plastique, l'attache comprenant une bande (10) allongée flexible plane munie dessus d'une série de crans (11) d'encliquetage, une tête (12) à une première extrémité de la bande (10), une ouverture (17) s'étendant à travers la tête (12) perpendiculairement au plan de la bande (10) dans la condition telle que moulée de l'attache et un cliquet (18) disposé dans l'ouverture (17) de la tête et agencé pour venir en prise avec les crans (11/22) de la bande lorsque la bande (10) est mise sous forme d'une boucle et que sa seconde extrémité est insérée à travers l'ouverture (17) de la tête,
le procédé étant caractérisé en ce que l'attache est moulée par injection d'une matière plastique en utilisant deux matrices de moule définissant une cavité de moule et pouvant être séparées selon une ligne droite perpendiculaire au plan de la bande (10) et axialement par rapport à l'ouverture (17) de la tête, l'ouverture (17) étant disposée à l'extérieur par rapport à un bord de côté latéral de la bande (10) plane de telle manière que, lorsqu'elle est attachée, la longueur de bande (10) à l'intérieur de ladite ouverture (17) de la tête (12) se trouve généralement parallèle et coplanaire à ladite première extrémité de la bande (10).

2. Un procédé tel que revendiqué à la revendication 1,
caractérisé en ce que l'attache est moulée avec des crans (11) de bande sur au moins une face de la bande (10) plane et en ce qu'un cliquet (18) est moulé sur le fond et/ou le sommet (15, 16) de l'ouverture (17) pour venir en prise avec les crans (11) de bande.

3. Un procédé tel que revendiqué à la revendication 1,
caractérisé en ce que l'attache est moulée avec des crans (22) de bande sur au moins un bord latéral de la bande (10) plane et en ce qu'un cliquet (18) est moulé sur une ou chaque paroi latérale (13, 14) de l'ouverture (17).

4. Un procédé tel que revendiqué dans une quelconque revendication précédente,
caractérisé en ce que la tête (12) de l'attache est pivotante jusqu'à une position dans laquelle l'ouverture (17) à travers elle s'étend généralement parallèlement au plan de la bande (10).
